# EUROPÄISCHE PATENTSCHRIFT

(11) **EP 1 417 913 B1**
(45) Veröffentlichungstag und Bekanntmachung des Hinweises auf die Patenterteilung: **16.01.2008**
(21) Anmeldenummer: 03405784.4
(22) Anmeldetag: 31.10.2003
(51) Int. Cl.: A47J 17/02

(54) **Sparschäler**
Fruit or vegetable peeler
Eplucheur de fruits ou de légumes

(30) Priorität: 06.11.2002 CH 18652002
(43) Veröffentlichungstag der Anmeldung: 12.05.2004
(73) Patentinhaber: Haberstroh, Michael, 78532 Tuttlingen (DE)
(72) Erfinder: Haberstroh, Michael, 78532 Tuttlingen (DE)
(74) Vertreter: Schneider Feldmann AG Patent- und Markenanwälte

(56) Entgegenhaltungen:
- FR-A- 1 583 584
- GB-A- 2 258 393

## Beschreibung

Die vorliegende Erfindung betrifft einen Sparschäler bestehend aus einem länglichen Griff mit daran angeordneter gabelförmiger Halterung, zwischen deren beiden Zinken eine Pendelklinge senkrecht zur Verlaufsrichtung des Griffes schwenkbeweglich gehalten ist.

Aelteste Sparschäler sind Schäler die ähnlich einem Messer gestaltet sind und einen Halteschaft aufweisen, an dem in axialer Verlängerung des Griffes eine Klinge angeordnet ist, welche geschlitzt ist und deren Schlitz einseitig eine Schneide hat, während die andere Seite als Führung dient. Hierdurch ist die Schäldicke entsprechend begrenzt und beim Arbeiten mit einem solchen Schäler wird folglich vermieden, dass eine unnötig dicke Schale abgeschnitten wird.

Neben dieser alten Form des Sparschälers entstand vor rund 50 Jahren die heute besonders verbreitete Version bestehend aus einem Griff und einer Pendelklinge, die schwenkbeweglich in einer gabelförmigen Halterung gehalten ist. Aus der US-A-2,986,813 ist ein solcher Sparschäler bekannt, bei dem der Griff und die Halterung praktisch aus einem einzigen Metallbandstreifen geformt ist. Diese äusserst preiswerte Version eines Sparschälers ist auch heute noch stark verbreitet. Gegenüber dieser Version sind heute auf dem Markt Sparschäler vorhanden, bei denen der Griff und die gabelförmige Halterung aus einem einzigen Kunststoffteil bestehen, wobei der Griff eher die Form eines üblichen Schraubenziehergriffes aufweist, an dem die gabelförmige Halterung angeformt ist, in welcher die Pendelklinge lagert. Hierbei verläuft die Pendelklinge senkrecht zur Verlaufsrichtung des Griffes. Die hier interessierende Form des Sparschälers geht von der letzbeschriebenen Version aus. Im Dokument FR 1 583 584 wird ein weiterer gattungsgemäßer Sparschäler gezeigt.

Sparschäler sind an sich Küchenwerkzeuge mit einem einzigen Verwendungszweck. Ausser zum Entfernen der Schale bei gewissen Gemüsen sind diese Sparschäler praktisch nicht anwendbar. Zwar sind die meisten Sparschäler mit einem meist dürftigen Hilfswerkzeug zum Entfernen von Augen an Kartoffeln ausgerüstet. Diese Hilfsinstrumente bestehen vorwiegend in der Gestalt von seitlich an der gabelförmigen Halterung angebrachten ösenförmigen Ausstechwerkzeugen. Diese Werkzeuge sind nicht nur äusserst dürftig gestaltet, sondern sie sind im Prinzip auch für die durchzuführenden Bewegungen falsch angeordnet. Die hier interessierenden Sparschäler sind so gestaltet, dass die Schälbewegung eine einfache Zugbewegung ist. Die Ausstechösen sind mit ihrer seitlichen Anordnung praktisch nur mittels einer Drehbewegung der Hand einsetzbar. Erfahrungsgemäss werden auch diese Ausstechösen kaum benutzt. Vielmehr wird im Haushalt zusätzlich ein herkömmliches Messer verwendet oder aber das eigentlich auszustechende Auge wird durch mehrfaches schichtweises Abtragen mittels dem Sparschäler entfernt. Dies geht zwar schnell, doch geht dabei der Effekt des Sparschälers vollständig verloren, da auf diese Weise mehr Material abgetragen wird als dies beispielsweise beim üblichen Schälen mittels eines Messers erfolgen würde.

Immer mehr werden jedoch Sparschäler auch für das Schälen diverser Früchte und unterschiedlichster Gemüse verwendet. Von der konzeptionellen Gestaltung her sind die Sparschäler praktisch jedoch nach wie vor im wesentlichen auf das Schälen von Kartoffeln ausgerichtet. Heute werden jedoch Sparschäler immer mehr auch beispielsweise zum Schälen von Gurken, Karotten, Melonen oder verschiedener Südfrüchte verwendet. Entsprechend ist es sinnvoll, Sparschäler mit Zusatzwerkzeugen auszurüsten, die beim Rüsten von Gemüse oder Früchten von Bedeutung sind.

Es ist daher die Aufgabe der vorliegenden Erfindung den an sich als Einzweckwerkzeug dienenden Sparschäler mit Zusatzwerkzeugen auszurüsten, mittels derer weitere Tätigkeiten in Zusammenhang mit dem Rüsten von Gemüse oder Früchten ermöglicht werden.

Diese Aufgabe löst ein Sparschäler mit den Merkmalen des Patentanspruches 1.
In der anliegenden Zeichnung sind bevorzugte Ausführungsformen des Erfindungsgegenstandes dargestellt und an Hand der nachfolgenden Beschreibung erläutert. Es zeigt:
- Figur 1: den Sparschäler in perspektivischer Darstellung in zusammengebauter Lage in Ansicht schräg von oben und
- Figur 2: denselben Sparschäler ebenfalls in perspektivischer Darstellung in Ansicht schräg von unten.
- Figur 3: zeigt den Griff für sich alleine in perspektivischer Sicht schräg von oben und
- Figur 4: denselben Griff in perspektivischer Darstellung schräg von unten gesehen.
- Figur 5: zeigt eine Halterung für sich allein dargestellt mit einem Zusatzwerkzeug, welches als hohlzylindrischer Apfelgehäusestecher ausgestaltet ist, während
- Figur 6: eine solche Halterung für sich alleine zeigt, bei der das Zusatzwerkzeug ein Fruchtfleischportionierer oder Melonenlöffel ist.
- Figur 7: zeigt eine gabelförmige Halterung mit angeformtem Zusatzwerkzeug in Form eines Ausstechmessers für sich allein dargestellt, während in der
- Figur 8: dasselbe Ausstechmesser in perspektivischer Darstellung nochmals gezeigt ist, das ebenfalls in der Figur 2 im Zusammenbau mit dem Griff 2 erkennbar ist.
- Figur 9: zeigt einen Klingenschutz in perspektivischer Darstellung und
- Figur 10: in der Seitenansicht mit dem Detail A, welches in
- Figur 11: in grösserem Massstab gezeichnet ist.
- Figur 12: zeigt denselben Klingenschutz in der Ansicht von untern und
- Figur 13: in der Ansicht von oben, während die
- Figur 14: eine perspektivische Darstellung wie nach Figur 9 von der anderen Seite und
- Figur 15: von oben zeigt.

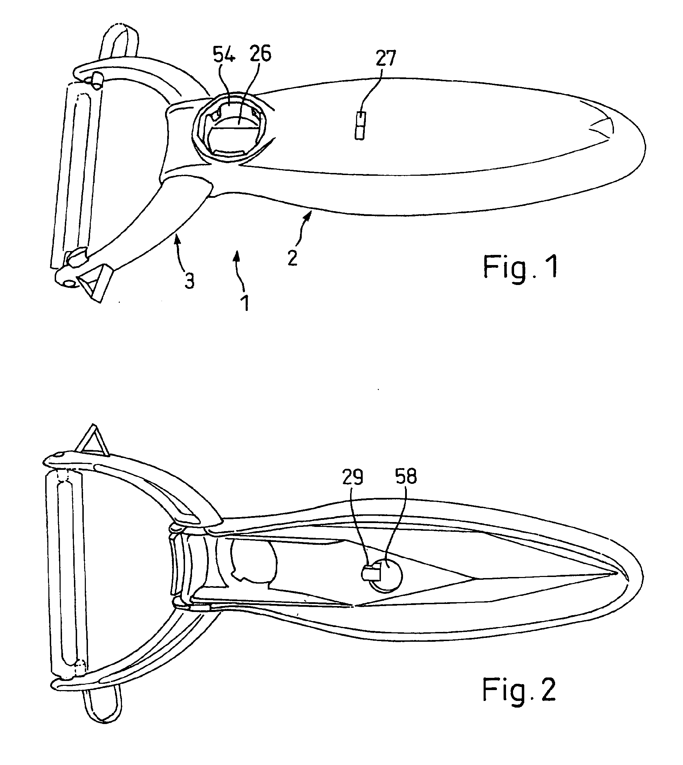

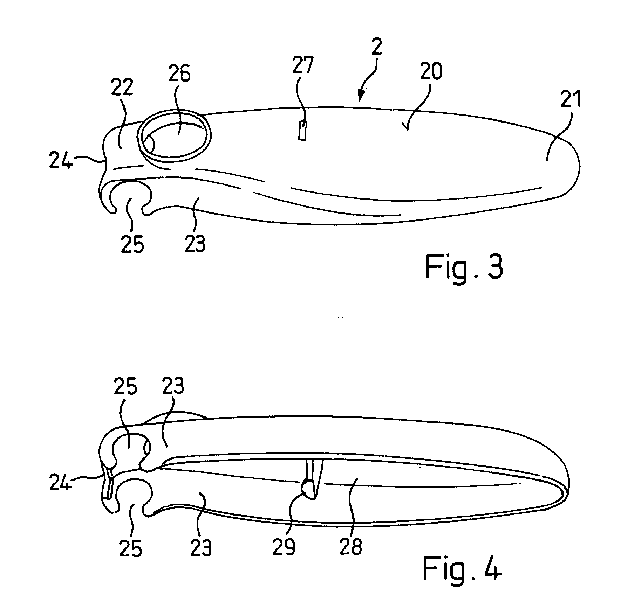

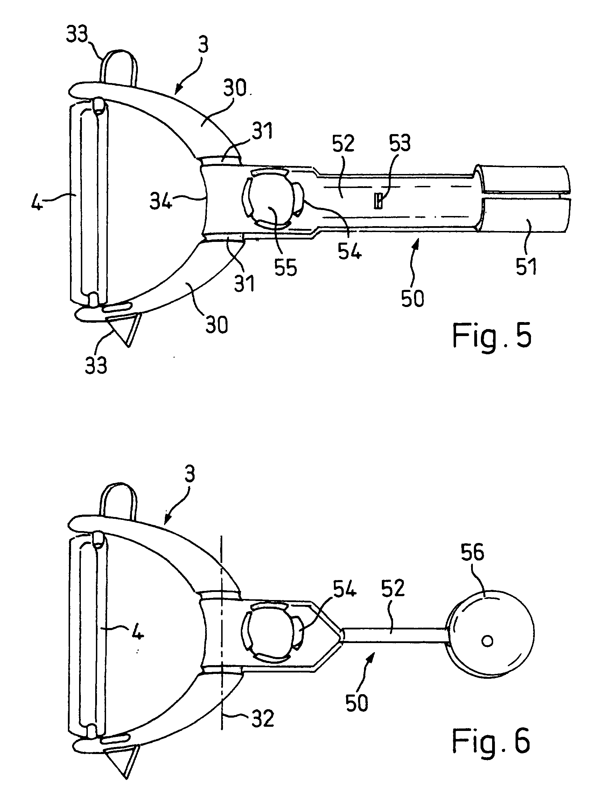

Der Sparschäler ist gesamthaft mit 1 bezeichnet. Er besteht aus zwei separat gefertigten Teilen, nämlich einem länglichen Griff 2 und einer gabelförmigen Halterung 3. Um diese Teile zu beschreiben wird vorerst auf die Figuren 3 und 4 zur Erläuterung des Griffes und danach auf die Figuren 5 und 6 zur detaillierten Beschreibung der gabelförmigen Halterung verwiesen worauf schliesslich nochmals auf die Figuren 1 und 2 zurückgegangen wird.

Der längliche Griff 2 hat eine konvexe, anatomisch geformte Oberfläche 20, die im hinteren Bereich 21 praktisch annähernd vollständig gerundet abgeschlossen ist, während der vordere Bereich 22 in mindestens annähernd parallel zur Längsachse des Griffes 2 und parallel zueinander verlaufende Seitenwände 23 übergeht. Die vordere Stirnseite 24 bildet einen annähernd klauenförmig nach unten verlaufenden Abschluss. In den beiden parallel verlaufenden Seitenwänden 23 sind deckungsgleich fluchtend hintereinander angeordnet zwei mehr als halbkreisförmig geschlossene Oeffnungen, die nachfolgend als Lagerkrallen 25 bezeichnet werden. In diesen beiden Lagerkrallen 25 wird auswechselbar die noch zu beschreibende Halterung 3 befestigt.

Im vorderen Endbereich ist bei der hier dargestellten Lösung zusätzlich eine nach oben offene Durchgangsöffnung (26). Diese Durchgangsöffnung dient dazu, einen Orangenschalenstecher, der am noch zu beschreibenden Halterungsteil angeformt ist, gesichert aufzunehmen, wobei gleichzeitig hierbei eine Endpositionssicherung kombiniert werden kann. Im mittleren Bereich des Griffes 2 ist in der Oberfläche 20 zusätzlich ein kleiner eckiger Durchbruch 27 erkennbar. Dieser Durchbruch dient zur Fertigung einer an der konvexen Unterseite angeformten federnden Rückhaltezunge 29. Der Durchbruch 27 kann zusätzlich noch dazu dienen einen über die Pendelklinge stülpbaren Schutz arretierend darin eingreifen zu lassen und damit die Halterung 3 in der zweiten Endposition zu sichern.

In den Figuren 5 und 6 erkennt man die gabelförmige Halterung 3, welche zwei zu einem Halbbogen verbundene Zinken 30 aufweist. Zwischen den beiden Enden der Zinken 30 ist die üblicherweise aus einem gehärteten Stahl geformte Pendelklinge 4 gehalten. Auf die Gestaltung der Pendelklinge 4 selber wird hier nicht eingegangen, da diese den herkömmlichen Normen entspricht. Am Zenit des durch die beiden Zinken 30 geformten Halbkreises ist ein nach aussen bezüglich des Halbkreises und senkrecht zur Pendelklinge verlaufend jeweils ein beliebiges Zusatzwerkzeug 50 angeformt. Seitlich dieses Zusatzwerkzeuges ist in den Zinken 30 parallel verlaufend jeweils beidseitig eine Lagerrille 31 eingeformt. Der Durchmesser dieser Lagerrillen entspricht dem Durchmesser der kreisförmigen Oeffnungen der Lagerkrallen 25 am Griff 2. Die Verbindungsstrecke zwischen den beiden Lagerrillen 31 bildet somit eine Schwenkachse für die Halterung 3. Der Deutlichkeit halber ist in der Figur 6 diese geometrische Schwenkachse, um die der Griff 2 und die Halterung 3 relativ zueinander verschwenkbar sind, eingezeichnet und mit der Bezugszahl 32 gekennzeichnet. Die beiden kreisförmigen Lagerrillen 31 verlaufen selbstverständlich senkrecht zu dieser geometrischen Schwenkachse 32. Lediglich der Vollständigkeit halber sind auch hier an den beiden Zinken 30 sogenannte Kartoffelaugenstecher 33 angeformt. Diese Ausstecher, die an einer Seite bogenförmig und an der anderen Seite spitzwinklig gestaltet sind, werden vorzugsweise spritztechnisch angeformt.

Ganz prinzipiell kann das Zusatzwerkzeug 50 beliebig gestaltet sein. In den Figuren 5 und 6 sind zwei Ausführungen dargestellt, während in den Figuren 1 und 2 eine weitere, anders gestaltete Ausführung gezeigt ist. Als eine mögliche Ausführungsform ist in der Figur 5 ein sogenannter Gehäusestecher 51 dargestellt, mit dem ein Kerngehäuse aus einer Frucht herausstechbar ist. Entsprechend lässt sich somit ein Apfel vollständig schälen und zudem das Kerngehäuse herausstechen, ohne dass hierzu zusätzlich noch ein weiteres Werkzeug erforderlich ist. An der Verbindung 52 zwischen dem eigentlichen Gehäusestecher 51 und der Verbindungsstelle 34 zwischen den beiden Zinken 30 ist eine Einrastöffnung 53 geformt, in der die federnde Rückhaltezunge 29 in der Endposition, in der der Schäler als Sparschäler verwendbar ist, einrastet. Zwischen der Einrastöffnung 53 und der Verbindungsstelle 34 sind mehrere senkrecht nach oben stehende Klingen 54 um eine runde Oeffnung 55 herum angeordnet. Diese im Kreis angeordneten Klingen 54 dienen beispielsweise dazu, die Anwachsstelle einer Frucht herauszuschneiden. Beispielsweise wird dies bei Zitrusfrüchten bevorzugt getan. Wird dieser Kreis in die Schale eingeschnitten, so lässt sich nachher die Frucht wesentlich besser schälen. Die Klingen 54 greifen zudem, wenn sie nicht benötigt werden und das Zusatzwerkzeug 50 somit im unteren Hohlbereich des Griffes 2 liegt, in die Durchgangsöffnung 26 ein und halten somit die Halterung 3 in der Endposition, wenn der Sparschäler 1 in der Schälposition ist.

Genau diese Verbindung mittels der Klingen 54 ist bei der Ausführung nach Figur 6 die einzige Verbindung des Zusatzwerkzeuges 50 mit dem Griff 2, da für die Verbindung mit der federnden Rückhaltezunge 29 bei einer Lösung, bei der ein Fruchtfleischportionierer in der Gestalt eines Löffels vorgesehen ist, keine Einrastmöglichkeit an der Verbindung 52 vernünftig machbar ist. Der Fruchtfleischportionierer 56 kann selbstverständlich auch zum Entkernen von Melonen, Gemüsegurken oder Zucchetti dienen.

Im zusammengebauten Zustand sieht der erfindungsgemässe Sparschäler 1 praktisch gleich wie ein herkömmlicher Sparschäler aus. Das Zusatzwerkzeug 50 ist in der Position, in der der Sparschäler als Schäler genutzt wird, nicht erkennbar, da es praktisch vollständig im unteren Hohlbereich des Griffes 2 Aufnahme findet. Lediglich die zur Lagepositionierung dienenden Mittel, nämlich einerseits die Durchgangsöffnung 26 und die darin eingreifenden Klingen 54 erkennt man sowie andererseits den Durchbruch 27, der zur Formung der federnden Rückhaltezunge erforderlich ist, ist in dieser Position erkennbar. Da die Halterung 3 und das Zusatzwerkzeug 50 einstückig und praktisch linear hintereinander fluchtend zueinander angeordnet sind, erkennt man auf Anhieb nicht, dass die gabelförmige Halterung 3 schwenkbeweglich mit dem Zusatzwerkzeug verbunden ist. Bei der Ausführung gemäss den Figuren 1 und 2 ist das Zusatzwerkzeug 50 als Stechmesser 57 gestaltet. Mittels eines solchen Ausstechmessers 57 lassen sich verschiedene Fruchtschalen einritzen oder auch schneiden. Dieses Ausstechmesser 57 weist in seiner Oberfläche eine Bohrung 58 auf, die zusammen mit der federnden Rückhaltezunge 29, die durch diese Bohrung 58 arretierend eingreift, ein Arretiermittel darstellt. Ebenso bilden die bereits erwähnten Klingen 54, die im Kreis angeordnet sind und in dieser Schälposition in die Durchgangsöffnung 26 eingreifen, ein Arretiermittel, mittels dessen das Zusatzwerkzeug gegen unbeabsichtigte Schwenkbewegungen im Griff gesichert ist, wenn sich der Sparschäler in der Schälposition befindet.

Aus dieser Schälposition kann die gabelförmige Halterung herausgeschwenkt werden, wobei dann die gabelförmige Halterung mit der Pendelklinge 4 im Bereich oberhalb des Griffes 3 zu liegen kommt, während nun das Zusatzwerkzeug 50 praktisch in Verlängerung des Griffes 2 nach vorne weist. Je nachdem welche Art der Bewegung erforderlich ist, kann man problemlos den Sparschäler so in der Hand halten, dass die eigentliche hohle Unterseite nach oben liegt und somit die Sparklinge unten an den Griff anliegt. Dies ist dann sinnvoll, wenn man beispielsweise den Fruchtfleischportionierer verwenden will.

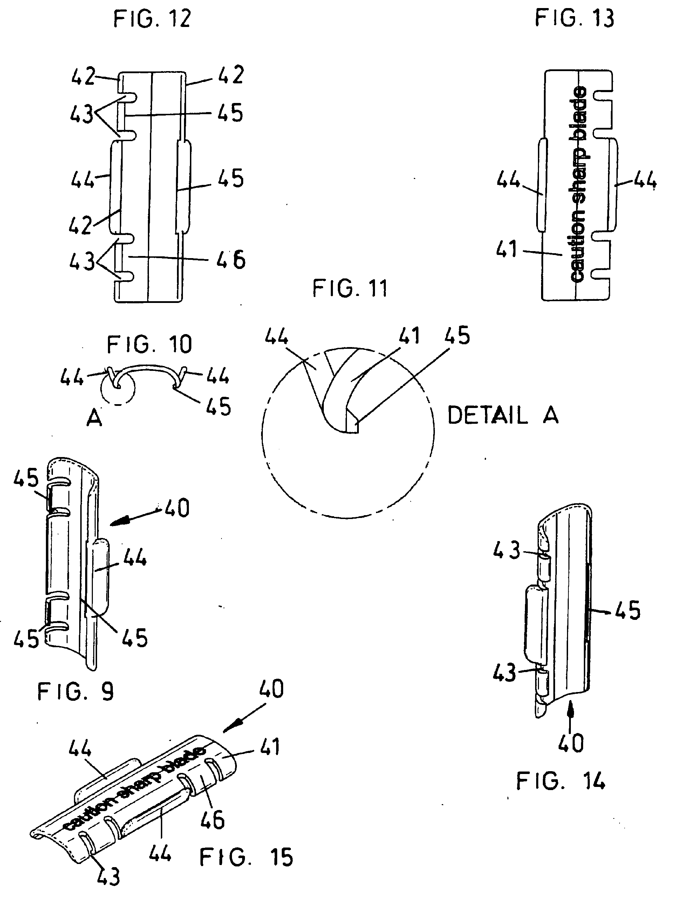

Da bei der Benutzung des Zusatzwerkzeuges 50 der Sparschäler umgekehrt in der Hand gehalten wird als bei der Verwendung der Pendelklinge 4 des Sparschälers, ist die Abdeckung der Pendelklinge wichtig. Entsprechend ist ein Klingenschutz 40 vorgesehen, der in den Figuren 9 bis 15 detailliert dargestellt ist. Der Klingenschutz 40 hat eine halbzylindrische abgeflachte Deckfläche 41 mit zwei Längskanten 42. Eine der beiden Längskanten ist mit senkrecht zur Längsrichtung verlaufenden Einschnitten 43 versehen. Am Bereich der Längskanten 42 sind auf der Deckfläche an einander gegenüberliegenden Seiten je eine laschenartig nach oben abstehende Grifffläche 44 angeformt, die zum Aufsetzen beziehungsweise Abnehmen des Klingenschutzes 40 dienen. Die Griffflächen 44 ragen leicht über die seitlichen Längskanten 42 nach oben, wie dies in der Figur 13 ersichtlich ist.

Für die eigentliche Halterung des Klingenschutzes 40 auf der Pendelklinge 4 sind an den inneren Längskanten 42 Bereiche mit einer nockenförmigen Längswulst 45 vorhanden. Auf jener Seite des Klingenschutzes an der die Einschnitte 43 vorhanden sind, bilden sich zwischen jeweils zwei relativ nahe beieinander verlaufenden Einschnitten Federzungen 46. Nur die beiden neben dem Bereich, wo die Griffflächen 44 angeformt sind, verbleibenden Federzungen 46 sind mit nockenförmigen Längswulsten 45 versehen.

An der nicht eingeschnittenen Längskante 42 ist hingegen nur ein nockenförmiger Längswulst 45 angeformt, und zwar nur im Bereich unterhalb der dortigen Grifffläche 44. Beim Zusammendrücken der beiden Griffflächen zueinander wird der Klingenschutz in diesem Bereich gespreizt und lässt sich so abheben, während beim Aufsetzen dieser Bereich nicht gespreizt wird, sondern nur die Federzungen 46 nach aussen ausweichen.

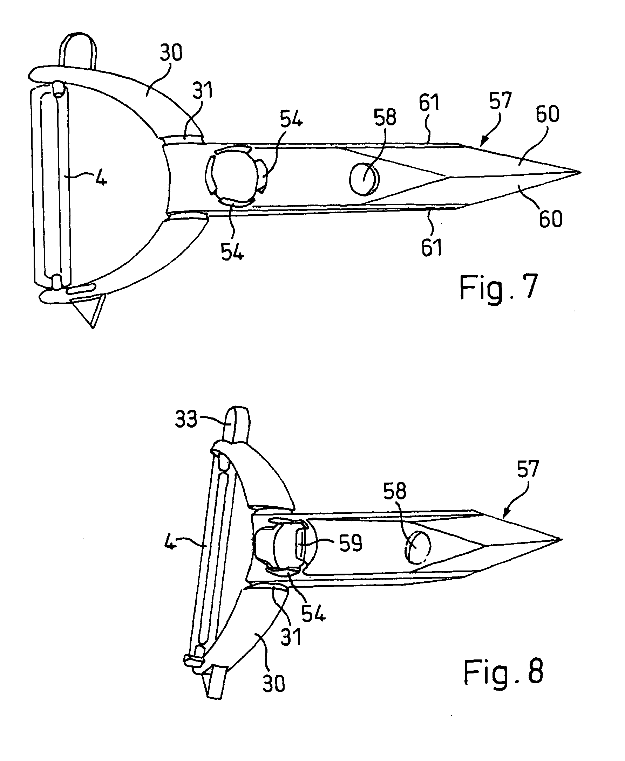

Das bereits erwähnte Arretierungsmittel, um die Verschwenkung des Zusatzwerkzeuges relativ zum Griff zu sichern, erfolgt mittels der Durchgangsöffnung 26, die als zylindrische Ringwand gestaltet ist. Die Ausstechklingen 54, welche ringförmig angeordnet sind, können zusätzlich mit Formschlussmitteln, wie beispielsweise einer Ringwulst versehen sein, welche in eine entsprechende Ringnut in der zylindrischen Ringwand der Durchgangsöffnung 26 eingreifen und so arretierend wirken. Diese scharfkantige Ringwulst 59 ist beispielsweise deutlich erkennbar in der Figur 8 dargestellt. Insbesondere das Ausstechmesser 57 stellt eine besonders bevorzugte Ausführungsform dar. Ein solches Ausstechmesser kann für verschiedenste Zusatzaufgaben verwendet werden, wie Schalen anritzen, gewisse Schneidtätigkeiten durchführen, die Anwachsstelle einer Zitrusfrucht ausschneiden mittels der Klingen 54 und zudem ist die Klinge dreidimensional als etwa länglicher Löffel geformt, mit zwei spitzwinkligen Schneiden 60 und zwei parallelen Seitenwänden 61, die eine löffelartige Gestalt ergeben. Diese erlaubt auch das Ausstechmesser zum Entfernen von Kernen aus gurkenartigen Gemüsen zu verwenden.

Dank der Möglichkeit, den Griff 2 von der gabelförmigen Halterung mit dem daran befestigten Zusatzwerkzeug voneinander zu trennen, ist auch die gesamte Reinigung des Sparschälers problemlos möglich. Auf diese Weise lässt sich sogar der gesamte Sparschäler in beide Teile getrennt in der Spülmaschine reinigen. Dank der Zweiteilung ist auch die kunststofftechnische Fertigung des Sparschälers problemlos möglich ohne hierzu ein komplexes Spritzwerkzeug mit Schiebern zu benötigen.

### Liste der Bezugszahlen

- 1: Sparschäler
- 2: Griff
- 3: Halterung, gabelförmige
- 4: Pendelklinge
- 20: Oberfläche
- 21: hinterer Bereich
- 22: vorderer Bereich
- 23: Seitenwände
- 24: vordere Stirnwand, klauenförmiger Abschluss
- 25: Lagerkrallen
- 26: Durchgangsöffnung, zylindrische Ringwand
- 27: Durchbruch
- 28: konvexe Unterseite
- 29: federnde Rückhaltezunge
- 30: Zinken
- 31: Lagerrillen
- 32: geometrische Schwenkachse
- 33: Kartoffelaugenstecher
- 34: Verbindungsstelle
- 40: Klingenschutz
- 41: Deckfläche
- 42: Längskanten
- 43: Einschnitte
- 44: Griffflächen
- 45: nockenförmige Längswulst
- 46: Federzungen
- 50: Zusatzwerkzeug
- 51: Gehäusestecher
- 52: Verbindung
- 53: Einrastöffnung
- 54: Klingen
- 55: Oeffnung
- 56: Fruchtfleischportionierer
- 57: Ausstechmesser
- 58: Bohrung
- 59: Ringwulst
- 60: Schneiden

## Patentansprüche

1. Sparschäler (1) bestehend aus einem länglichen Griff (2) mit daran angeordneter gabelförmiger Halterung (3), zwischen deren beiden Zinken (30) eine Pendelklinge (4) senkrecht zur Verlaufsrichtung des Griffes (2) schwenkbeweglich gehalten ist, **dadurch gekennzeichnet, dass** die Halterung (3) einstückig mit einem Zusatzwerkzeug (50) verbunden ist und der gesonderte Griff schwenkbeweglich (25,31) so mit der Halterung verbunden ist, dass in der Schälposition das Zusatzwerkzeug (50) mindestens annähernd vollständig im Griff (2) Aufnahme findet.

2. Sparschäler nach Anspruch 1, **dadurch gekennzeichnet, dass** die Halterung (3) eine aus den beiden Zinken (30) gebildete etwa halbbogenförmige Gestalt aufweist, an dessen Zenit das Zusatzwerkzeug (50) angeformt ist, wobei beidseits des Ansatzes des Zusatzwerkzeuges umlaufende Lagerrillen (31) eingeformt sind, und dass der Griff (2) zwei formschlüssig in die Lagerrillen passende Lagerkrallen (25) hat, die eine schwenkbewegliche Steckverbindung des Griffes mit der Halterung bilden.

3. Sparschäler nach Anspruch 1, **dadurch gekennzeichnet, dass** mindestens in der Schälposition das Zusatzwerkzeug (50) mittels Arretiermittel (26,54; 29,58) gegen unbeabsichtigte Schwenkbewegungen im Griff gesichert ist.

4. Sparschäler nach Anspruch 1, **dadurch gekennzeichnet, dass** der Griff auf seiner Oberfläche (20) ergonometrisch bombiert und auf der Unterseite als Hohlraum (28) gestaltet ist.

5. Sparschäler nach Ansprüchen 3 und 4, **dadurch gekennzeichnet, dass** im Hohlraum ein zur offenen Seite hin gerichtete Rückhaltezunge (29) angeordnet ist, die mit einer endständigen Rückhaltenase versehen ist, während das Zusatzwerkzeug (50) eine Vertiefung oder eine Bohrung (58) aufweist, in oder durch die die Zunge (29) in der Schälposition greift und die Rückhaltenase das Zusatzwerkzeug (50) relativ zum Griff (2) in dieser Lage sichert.

6. Sparschäler nach Anspruch 1, **dadurch gekennzeichnet, dass** das Zusatzwerkzeug (50) als Ausstechmesser (57) gestaltet ist.

7. Sparschäler nach Anspruch 1, **dadurch gekennzeichnet, dass** das Zusatzwerkzeug (50) als Fruchtfleischportionierer (56) gestaltet ist.

8. Sparschäler nach Anspruch 1, **dadurch gekennzeichnet, dass** das Zusatzwerkzeug (50) als hohlzylindrischer Apfelgehäusestecher (51) ausgestaltet ist.

9. Sparschäler nach Anspruch 1, **dadurch gekennzeichnet, dass** die Pendelklinge (4) mit einer aufsteckbaren Schutzhülse versehen ist.

10. Sparschäler nach Anspruch 9, **dadurch gekennzeichnet, dass** die Schutzhülse mit einem Arretierstift versehen ist, der in einer Vertiefung oder einem Durchbruch (27) in der Griffoberfläche (20) einzugreifen vermag und so eine Positionssicherung des Zusatzwerkzeuges (50) in dessen Benutzungslage ergibt.

11. Sparschäler nach Anspruch 1, **dadurch gekennzeichnet, dass** das Zusatzwerkzeug (50) im Bereich nahe der Lagerrillen (31) kreisförmig angeordnete Ausstechklingen (54) aufweist.

12. Sparschäler nach Anspruch 11, **dadurch gekennzeichnet, dass** im Griff (2) nahe dem Schwenklager eine kreisförmige Durchbruchsöffnung (26) vorhanden ist, mit einer zur offenen Unterseite gerichteten zylindrischen Ringwand, in der die Ausstechklingen (54) gesichert gehalten sind.

13. Sparschäler nach Anspruch 12, **dadurch gekennzeichnet, dass** die Ausstechklingen (54) mit Formschlussmitteln versehen sind, die mit Formschlussmitteln in der zylindrischen Ringwand der Durchbruchsöffnung (26) zusammen wirken und eine Lagesicherung vom Zusatzwerkzeug zum Griff ergeben.

14. Sparschäler nach Anspruch 1, **dadurch gekennzeichnet, dass** dieser einen Klingenschutz (40) umfasst, der aus einer Deckfläche (41) mit federnden Bereichen und Griffflächen (44) besteht und mit nockenförmigen Längswulsten (45) zur klammerartigen Halterung an der Pendelklinge (4).

15. Sparschäler nach Anspruch 14, **dadurch gekennzeichnet, dass** in einer Längskante (42) der Deckfläche (41) quer zur Längsrichtung verlaufende Einschnitte (43) vorhanden sind, so dass die dazwischen verbleibenden Bereiche Federzungen (46) bilden, an denen die nockenförmigen Längswulste (45) angeformt sind, während an der anderen Längskante (42) eine solche Längswulst (45) nur im Bereich unter der Grifffläche (44) angebracht ist.

## Claims

1. A low-waste peeler (1) consisting of an elongate grip (2) with a fork-like mounting (3) arranged thereon, between whose two prongs (30) a swinging blade (4) is held in a pivotally movable manner perpendicular to the running direction of the grip (2), wherein the mounting (3) is connected to an auxiliary tool (50) as one piece and the separate grip is connected to the mounting in a pivotally movable (25, 31) manner such that in the peeling position the auxiliary tool (50) is at least approximately completely accommodated in the grip (2).

2. A low-waste peeler according to claim 1, wherein the mounting (3) has a roughly semi-arc shape formed by the two prongs (30), on whose apex the auxiliary tool (50) is integrally formed, wherein on both sides of the projection of the auxiliary tool there are integrally formed circumferential bearing channels (31), and wherein the grip (2) has two bearing claws (25) which fit into the bearing channels with a positive fit and which form a pivotally movable insert-connection of the grip to the mounting.

3. A low-waste peeler according to claim 1, wherein at least in the peeling position the auxiliary tool (50) is secured in the grip from unintended pivoting movements by way of locking means (26, 54; 29, 58).

4. A low-waste peeler according to claim 1, wherein the grip on its upper surface (20) is ergonometrically embossed and is formed on the lower side as a cavity (28).

5. A low-waste peeler according to claim 3 and 4, wherein in the cavity there is arranged a retaining tongue (29) which is directed towards the open side and which is provided with a retaining lug at the end, whilst the auxiliary tool (50) comprises a recess or a bore (58) into which or through which the tongue (29) engages in the peeling position, and the retaining lug secures the auxiliary tool (50) relative to the grip (2) in this position.

6. A low-waste peeler according to claim 1, wherein the auxiliary tool (50) is designed as a cutting-out knife (57).

7. A low-waste peeler according to claim 1, wherein the auxiliary tool (50) is configured as a fruit pulp portioner (56).

8. A low-waste peeler according to claim 1, wherein the auxiliary tool (50) is designed as hollow cylindrical apple core gouger (51).

9. A low-waste peeler according to claim 1, wherein the swinging blade (4) is provided with a protective sleeve which may be attached on.

10. A low-waste peeler according to claim 9, wherein the protective sleeve is provided with a locking pin which may engage in a recess or an opening (27) in the grip surface (20) and thus a position securement of the auxiliary tool (50) in its position of use is created.

11. A low-waste peeler according to claim 1, wherein the auxiliary tool (50) in the region near to the bearing channels (31) comprises circularly arranged cutting-out blades (54).

12. A low-waste peeler according to claim 11, wherein in the grip (2) near to the pivot bearing there is present a circular through-opening (26), with a cylindrical annular wall directed to the open lower side, in which the cutting-out blades (54) are held secured.

13. A low-waste peeler according to claim 12, wherein the cutting-out blades (54) are provided with positive fit means which cooperate with positive fit means in the cylindrical annular wall of the through-opening (26) and create a position securement of the auxiliary tool to the grip.

14. A low-waste peeler according to claim 1, wherein this comprises a blade protection (40) which consists of a cover surface (41) with resilient regions and grip surfaces (44) and with rib-like longitudinal beads (45) for the clip-like mounting on the swinging blade (4).

15. A low-waste peeler according to claim 14, wherein in a longitudinal edge (42) of the cover surface (41) there are present incisions (43) running transversely to the longitudinal direction so that the regions remaining therebetween form spring tongues (46) on which the rib-like longitudinal beads (45) are integrally formed, whilst on the other longitudinal edge (42) such a longitudinal bead (45) is only attached in the region below the grip surface (44)

## Revendications

1. Couteau économe (1) constitué d'un manche longitudinal (2) avec un élément de maintien (3) en forme de fourche disposé sur le manche, entre les deux pointes (30) duquel une lame oscillante (4) est maintenue de façon à pouvoir pivoter verticalement par rapport à la direction du manche (2), **caractérisé en ce que** l'élément de maintien (3) est relié en une seule pièce avec un outil auxiliaire (50) et **en ce que** le manche séparé est relié de façon pivotante (25, 31) avec l'élément de maintien, si bien que dans la position d'épluchage, l'outil auxiliaire (50) est accueilli au moins presque complètement dans le manche (2).

2. Couteau économe selon la revendication 1, **caractérisé en ce que** l'élément de maintien (3) présente à peu près la forme d'un demi-cercle constituée des deux pointes (30), au sommet desquelles est formé l'outil auxiliaire (50), des rainures de logement (31) circulaires étant formées des deux côtés du commencement de l'outil auxiliaire, et **en ce que** le manche (2) possède deux griffes de logement (25) adaptées aux rainures de logement par complémentarité de forme, ces griffes formant une liaison pivotante par enfichage entre le manche et l'élément de maintien.

3. Couteau économe selon la revendication 1, **caractérisé en ce que** celui-ci est bloqué à l'aide de moyens d'arrêt (26, 54 ; 29, 58), au moins dans la position d'épluchage de l'outil auxiliaire (50), afin d'éviter des mouvements de pivotement indésirables dans le manche.

4. Couteau économe selon la revendication 1, **caractérisé en ce que** le manche est ergonomiquement bombé à sa surface (20) et **en ce qu'**il comporte un espace creux (28) dans sa face inférieure.

5. Couteau économe selon les revendications 3 et 4, **caractérisé en ce qu'**une lame de retenue (29), tournée vers le côté ouvert et pourvue d'un ergot de retenue terminal, est disposée dans l'espace creux, tandis que l'outil auxiliaire (50) comporte un renfoncement ou un perçage (58), dans lequel s'engage la lame (29) dans la position d'épluchage, et l'ergot de retenue maintient l'outil auxiliaire (50) dans cette position par rapport au manche (2).

6. Couteau économe selon la revendication 1, **caractérisé en ce que** l'outil auxiliaire (50) est conçu comme un couteau d'évidement (57).

7. Couteau économe selon la revendication 1, **caractérisé en ce que** l'outil auxiliaire (50) est conçu comme un portionneur (56) de pulpe de fruit.

8. Couteau économe selon la revendication 1, **caractérisé en ce que** l'outil auxiliaire (50) est conçu comme un vide-pommes (51).

9. Couteau économe selon la revendication 1, **caractérisé en ce que** la lame oscillante (4) est pourvue d'un étui de protection emboîtable.

10. Couteau économe selon la revendication 9, **caractérisé en ce que** l'étui de protection est pourvu d'une tige d'arrêt, qui est capable de s'introduire dans un renfoncement ou dans une percée (27) dans la surface de manche (20) et qui permet ainsi de bloquer l'outil auxiliaire (50) dans sa position d'utilisation.

11. Couteau économe selon la revendication 1, **caractérisé en ce que** l'outil auxiliaire (50) comporte des lames d'évidement (54) disposées de façon circulaire dans la région proche des rainures de logement (31).

12. Couteau économe selon la revendication 11, **caractérisé en ce qu'**une ouverture de passage circulaire (26) est prévue dans le manche (2) à proximité du support pivotant, avec une paroi circulaire cylindrique tournée vers la face inférieure ouverte, dans laquelle les lames d'évidement (54) sont bloquées.

13. Couteau économe selon la revendication 12, **caractérisé en ce que** les lames d'évidement (54) sont pourvues de moyens d'engagement par complémentarité de forme, qui coopèrent avec des moyens d'engagement par complémentarité de forme dans la paroi circulaire cylindrique des ouvertures de passage (26) et qui permettent d'assurer le positionnement de l'outil auxiliaire par rapport au manche.

14. Couteau économe selon la revendication 1, **caractérisé en ce que** celui-ci comprend une protection de lame (40), qui est constituée d'une surface couvrante (41) avec des régions élastiques et des surfaces de préhension (44), avec des bourrelets longitudinaux (45) en forme de cames pour une fixation du genre agrafe sur la lame oscillante (4).

15. Couteau économe selon la revendication 14, **caractérisé en ce que** des encoches (43) sont formées en perpendiculairement à la longueur d'une arête longitudinale (42) de la surface couvrante (41), si bien que les régions intermédiaires forment des lames flexibles (46), sur lesquelles sont formés les bourrelets longitudinaux (45), tandis que sur l'autre arête longitudinale (42), un tel bourrelet longitudinal (45) n'est prévu que dans la région située sous la surface de préhension (44).
